# EUROPÄISCHE PATENTSCHRIFT

(11) **EP 2 813 288 B1**
(45) Veröffentlichungstag und Bekanntmachung des Hinweises auf die Patenterteilung: **19.08.2015**
(21) Anmeldenummer: 13172177.1
(22) Anmeldetag: 14.06.2013
(51) Int. Cl.: B01J 20/10, A01K 1/015, B01J 20/12, B01J 20/24

(54) **SORPTIONSMITTEL IN GRANULATFORM ENTHALTEND EIN ORGANISCHES MATERIAL UND EIN ANORGANISCHEN MATERIAL**
ABSORPTION AGENT IN GRANULATE FORM CONTAINING AN ORGANIC MATERIAL AND AN INORGANIC MATERIAL
MOYEN DE SORPTION SOUS FORME DE GRANULAT CONTENANT UN MATÉRIAU ORGANIQUE ET UN MATÉRIAU ANORGANIQUE

(43) Veröffentlichungstag der Anmeldung: 17.12.2014
(73) Patentinhaber: H. von Gimborn GmbH, 46446 Emmerich (DE)
(72) Erfinder: Prinsteiner, Robert, D-93309 Kelheim (DE); Hammerl, Rainer, D-93077 Bad-Abbach (DE)
(74) Vertreter: Andrae | Westendorp Patentanwälte Partnerschaft

(56) Entgegenhaltungen:
- EP-A1- 0 087 001
- EP-A2- 0 619 140
- DE-A1- 10 064 347

## Beschreibung

### Technisches Gebiet der Erfindung

Die Erfindung betrifft ein Sorptionsmittel in Granulatform enthaltend ein organisches Material mit mindestens einem cellulosehaltigen Material und ein anorganisches Material mit mindestens einem Tonmaterial, wobei der Gewichtsanteil des organischen Materials in einem oberen Teilchengrößenbereich (A) größer ist als der Gewichtsanteil des organischen Materials einen Tonmaterials in einem unteren Teilchengrößenbereich (B). Die Erfindung betrifft weiterhin ein Verfahren zur Herstellung eines solchen Sorptionsmittels sowie dessen Verwendung als bei der Aufnahme von Flüssigkeit Klumpen bildende Tierstreu.

### Hintergrund der Erfindung

Besonders in städtischer Umgebung ist die Heimtierhaltung in zunehmendem Maße mit der Verwendung von Streumaterialien verbunden. Diese haben die Aufgabe, die von den Tieren abgegebenen Flüssigkeiten aufzusaugen. Sie sollten ferner den halbfesten, feuchten tierischen Exkrementen und Ausscheidungen Feuchtigkeit entziehen, um damit die Geruchsentwicklung zu vermindern. Gute Streumaterialien sollen weiterhin die abgegebenen oder entzogenen Flüssigkeiten unter Bildung eines kompakten Klumpens aufnehmen, der in einfacher und sparsamer Weise entfernt werden kann. Eine optimale Tierstreu soll somit ein hohes Saugvermögen haben und die von den Tieren abgegebenen Flüssigkeiten vollständig innerhalb der Schüttung absorbieren, ohne dass der Boden des Streubehälters benetzt wird.

Die auf dem Markt anzutreffenden Streumaterialen sind sowohl organische Materialien, wie Stroh, Sägemehl, Holzspäne, Rinden, geschreddertes Papier, Cellulosefasern, landwirtschaftliche Reststoffe als auch verschiedene anorganische Materialien, welche allein oder in Mischungen mit den genannten organischen Materialien eingesetzt werden. Der Nachteil der organischen Streumaterialien ist die oftmals nicht vorhandene oder nicht zufriedenstellende Klumpenbildung bzw. ihre Konsistenz sowie ihre Neigung zur mikrobiellen Zersetzung, insbesondere im Zusammenwirken mit Feuchtigkeit.

Als anorganische Materialien werden vor allem Tonmineralien, insbesondere Schichtsilikate, eingesetzt. Eine Besonderheit mancher Schichtsilikate ist die Fähigkeit, hohe Mengen an Feuchtigkeit aufzunehmen und zu speichern.

Im Allgemeinen eignen sich Streuen, welche auf Ton basieren sehr gut für die Verwendung als Tierstreu durch die gute Absorption und Verklumpung von tierischen Ausscheidungen.

Bei Verwendung von cellulosehaltigen Materialien in Tierstreu zeigt sich häufig das Problem des verstärkten Austrags von Tierstreu aus der Tiertoilette. So haften die cellulosehaltigen Teilchen wie z.B. zerkleinertes Holzmaterial mit ihrer Oberfläche oft besonders gut an dem Tierfell bzw. den Pfoten und sind zudem mit ihrer geringen Dichte noch besonders leicht.

Ausgehend von dem Stand der Technik ist es daher die Aufgabe der vorliegenden Erfindung, ein Sorptionsmittel bereitzustellen, welches bei der Benutzung als Tierstreu gute Geruchsbindung, Flüssigkeitsaufnahme und Klumpenbildungseigenschaften bereitstellt und insbesondere den Austrag von Streuteilchen aus der Tiertoilette bei Benutzung durch ein Haustier minimiert.

Weiterhin ist es eine Aufgabe der vorliegenden Erfindung, ein Verfahren zur Herstellung eines solchen Sorptionsmittels bereitzustellen.

Das Dokument DE 10 064 347 offenbart ein Einstreu für Katzen und Kleintiere, bestehend aus einer Mischung aus getrocknetem Material pflanzlichen Ursprungs und einem fördernden Hilfsstoff, welche ein pulverförmiges wasserlösliches Polymer ist.

### Gegenstand der Erfindung

Diese Aufgabe wurde durch die vorliegende Erfindung und ihre nachstehend wiedergegebenen Ausführungsformen gelöst.

Die Erfindung betrifft in einem ersten Aspekt ein Sorptionsmittel in Granulatform enthaltend ein organisches Material mit mindestens einem cellulosehaltiges Material und ein anorganisches Material mit mindestens ein Tonmaterial, wobei das Granulat ein Teilchengrößenspektrum mit einem oberen Teilchengrößenbereich (A) mit einer Teilchengröße von mindestens 2 mm, und einen unteren Teilchengrößenbereich (B) mit einer Teilchengröße von weniger als 2 mm umfasst, und wobei der Gewichtsanteil des organischen Materials in dem oberen Teilchengrößenbereich (A) größer ist als der Gewichtsanteil des organischen Materials in dem unteren Teilchengrößenbereich (B).

Nach einer erfindungsgemäßen Ausführungsform liegt bei dem Sorptionsmittel der Gewichtsanteil des organischen Materials in dem oberen Teilchengrößenbereich (A) mindestens 5 Gew-%, insbesondere mindestens 10 Gew.-%, weiter bevorzugt mindestens 15 Gew.-% höher als der Gewichtsanteil des organischen Materials in dem unteren Teilchengrößenbereich (B).

Nach einer weiteren erfindungsgemäßen Ausführungsform liegt der Gewichtsanteil des organischen Materials in dem oberen Teilchengrößenbereich (A) zwischen etwa 10 und 100 Gew.-%, insbesondere zwischen etwa 20 und 95 Gew.-%, bevorzugt zwischen etwa 30 und 90 Gew.-%, jeweils bezogen auf das Gesamtgewicht der Teilchen in dem oberen Teilchengrößenbereich.

Nach einer weiteren erfindungsgemäßen Ausführungsform liegt der Gewichtsanteil des anorganischen Materials in dem oberen Teilchengrößenbereich (A) zwischen 0 und 90 Gew.-%, insbesondere zwischen etwa 5 und 50 Gew.-%, jeweils bezogen auf das Gesamtgewicht der Teilchen in dem oberen Teilchengrößenbereich.

Nach einer weiteren erfindungsgemäßen Ausführungsform liegt der Gewichtsanteil des organischen Materials in dem unteren Teilchengrößenbereich (B) zwischen 0 und etwa 80 Gew.-%, insbesondere zwischen etwa 1 und 75 Gew.-%, jeweils bezogen auf das Gesamtgewicht der Teilchen in dem unteren Teilchengrößenbereich.

Nach einer weiteren erfindungsgemäßen Ausführungsform liegt der Gewichtsanteil des anorganischen Materials in dem unteren Teilchengrößenbereich (B) zwischen etwa 20 und 100 Gew.-%, insbesondere zwischen etwa 30 und 99 Gew.-%, jeweils bezogen auf das Gesamtgewicht der Teilchen in dem unteren Teilchengrößenbereich.

Nach einer weiteren erfindungsgemäßen Ausführungsform macht das anorganische Material und das organische Material zusammen mindestens 50 Gew.%, insbesondere mindestens 75 Gew-%, bevorzugt mindestens 90 Gew.-% des Gesamtgewichts des Sorptionsmittels aus.

Nach einer weiteren erfindungsgemäßen Ausführungsform besteht der obere Teilchengrößenbereich (A) aus Teilchen mit einer Teilchengröße von 2 mm bis 5 mm, und der untere Teilchengrößenbereich (B) aus Teilchen mit einer Teilchengröße von 0,5 mm bis weniger als 2 mm.

Nach einer weiteren erfindungsgemäßen Ausführungsform besteht der obere Teilchengrößenbereich (A) aus Teilchen mit einer Teilchengröße von 2 mm bis 3 mm, und der untere Teilchengrößenbereich (B) aus Teilchen mit einer Teilchengröße von 0,1 mm bis weniger als 2 mm.

Nach einer weiteren erfindungsgemäßen Ausführungsform enthält das mindestens eine Tonmaterial einen smektitischen Ton, insbesondere einen bentonithaltigen Ton oder besteht daraus.

Nach einer weiteren erfindungsgemäßen Ausführungsform handelt es sich bei dem mindestens einen Tonmaterial um ein Tongemisch.

Nach einer weiteren erfindungsgemäßen Ausführungsform enthält das organische Material und/oder das anorganische Material mindestens ein Bindemittel, vorzugsweise in einem Gewichtsanteil von bis zu 10 Gew.-%, bezogen auf das Gesamtgewicht des Sorptionsmittels.

Nach einer weiteren erfindungsgemäßen Ausführungsform handelt es sich bei dem erfindungsgemäßen Sorptionsmittel um eine bei der Aufnahme von Flüssigkeit Klumpen bildende Tierstreu.

Ein weiterer Aspekt der Erfindung betrifft ein Verfahren zur Herstellung eines Sorptionsmittels in Granulatform nach einem der vorstehenden Ansprüche enthaltend ein organisches Material mit mindestens einem cellulosehaltigen Material und einem anorganischen Material mit mindestens einem Tonmaterial, umfassend die folgenden Schritte:
a) Bereitstellen eines Granulats mit einer Teilchengröße von mindestens 2 mm,
b) Bereitstellen eines Granulats mit einer Teilchengröße von weniger als 2 mm,
   wobei der Gewichtsanteil des organischen Materials in dem Granulat gemäß Schritt a) größer ist als der Gewichtsanteil des organischen Materials in dem Granulat gemäß Schritt b).
c) Mischen der Granulate gemäß der Schritte a) und b), um ein Granulatgemisch zu erhalten, in dem der Gewichtsanteil des organischen Materials in dem oberen Teilchengrößenbereich (A) größer ist als der Gewichtsanteil des organischen Materials in dem unteren Teilchengrößenbereich (B).

Nach einer weiteren erfindungsgemäßen Ausführungsform werden als Granulat gemäß Schritt a) Teilchen mit einer Teilchengröße im Bereich von 2 mm bis 5mm, und als Granulat gemäß Schritt b) Teilchen mit einer Teilchengröße im Bereich von 0,5 mm bis weniger als 2 mm eingesetzt.

Ein weiterer erfindungsgemäßer Aspekt betrifft die Verwendung eines Sorptionsmittels gemäß einem der vorstehenden Ansprüche als bei der Aufnahme von Flüssigkeit Klumpen bildende Tierstreu in einer Tiertoilette, insbesondere zur Verringerung des Austrags von Teilchen aus der Tiertoilette.

### Ausführungsformen der Erfindung

Im Rahmen der vorliegenden Erfindung wurde überraschend gefunden, dass bei einer Ungleichverteilung des organischen Materials über das Teilchengrößenspektrum des Sorptionsmittelgranulats besondere Vorteile erzielt werden. So führt ein höherer Gewichtsanteil des organischen Materials in einem oberen Teilchengrößenbereich (A) bzw. entsprechend ein geringer Gewichtsanteil des organischen Materials in dem unteren Teilchengrößenbereich (B) zu günstigen Eigenschaften des Sorptionsmittels in Bezug auf Flüssigkeits- und Geruchsbindung und Klumpverhalten sowie insbesondere einer Minimierung des Teilchenaustrags bei Benutzung als Tierstreu in einer Tiertoilette.

Dabei zeigen sich die erfindungsgemäßen Vorteile besonders gut, wenn der obere Teilchengrößenbereich (A) eine Teilchengröße von mindestens 2 mm und der untere Teilchengrößenbereich (B) eine Teilchengröße von weniger als 2 mm aufweist bzw. diese Teilchengrößenbereiche verwendet werden. Die Teilchengrößenbereiche lassen sich einfach durch Sieben bzw. Klassieren mithilfe von herkömmlichen Sieben mit definierter Siebmaschenweite erzeugen.

Das Sorptionsmittel der vorliegenden Erfindung liegt in Granulatform vor, das heißt in Form eines körnigen bis pulverförmigen, leicht schüttbaren Feststoffs.

Die Teilchengröße der Granulatteilchen kann beispielsweise im Bereich von etwa 0,5 mm bis etwa 5 mm, oder im Bereich von etwa 0,1 mm bis etwa 3 mm liegen. Die Teilchengrößenbereiche können nach dem Fachmann geläufigen Verfahren eingestellt bzw. klassiert werden, insbesondere durch Verwendung von Sieben mit definierter Siebmaschengröße.

Weiterhin enthält das erfindungsgemäße Sorptionsmittel ein organisches Material mit mindestens einem cellulosehaltigen Material. Bevorzugt verwendet werden ein oder mehrere feinteilige cellulosehaltige Materialien wie z.B. zerkleinertes Holzmaterial. Bevorzugt sind beispielsweise feinteiliges Holzmehl und/oder zerkleinerte Holzspäne. Es können aber auch feinteiliger Zellstoff und/oder einen Sekundärfasern enthaltenden Cellulose-Stoff verwendet werden. Es können auch Stroh oder Samen- bzw. Fruchtschalen etc. als organisches Material bzw. cellulosehaltiges Material enthalten sein. Grundsätzlich können alle dem Fachmann geläufigen cellulosehaltigen Materialien verwendet werden. Als feinteiliges cellulosehaltiges Material verwendet man nach einer Ausführungsform feingemahlenen Zellstoff und/oder einen Sekundärfasern enthaltenden Cellulose-Stoff. Nach einer weiteren Ausführungsform verwendet man zerkleinertes Holzmaterial, insbesondere feingemahlenes Holzmehl und/oder zerkleinerte Holzspäne. Die Teilchengröße der verwendeten feinteiligen Materialien kann weit schwanken, liegt jedoch beispielsweise bei Werten im Bereich von 0,01 mm bis 5 mm, insbesondere 0,05 mm bis 3 mm.

Bevorzugt besteht das organische Material im Wesentlichen, insbesondere zu mehr als 75 Gew.-%, vorzugsweise mehr als 85 Gew.-%, weiter bevorzugt mehr als 90 Gew.-%, weiter bevorzugt mehr als 95 Gew.-% aus mindestens einem cellulosehaltigen Material. Nach einer bevorzugten Ausführungsform der Erfindung besteht das organische Material vollständig aus mindestens einem cellulosehaltigen Material, so dass die beiden Begriffe "organisches Material" und "mindestens ein cellulosehaltiges Material" bei dieser erfindungsgemäßen Ausführungsform gleich zu setzen sind. Die Anwesenheit weiterer organischer Komponenten ist nicht grundsätzlich ausgeschlossen. Bevorzugt enthält jedoch das organische Material neben dem mindestens einen cellulosehaltigen Material weniger als 10 Gew.-%, insbesondere weniger als 5 Gew.-%, insbesondere weniger als 3 Gew.-% an anderen organischen Komponenten.

Nach einer bevorzugten Ausführungsform liegt der Gewichtsanteil des organischen Materials in dem oberen Teilchengrößenbereich (A) mindestens 5 Gew.-%, insbesondere mindestens 10 Gew.-%, weiter bevorzugt mindestens 15 Gew.-% höher als der Gewichtsanteil des organischen Materials in dem unteren Teilchengrößenbereich (B), wobei der Gewichtsanteil des organischen Materials in dem unteren Teilchengrößenbereich (B) als Bezugsgröße (100 %) zugesetzt wird.

Nach einer anderen bevorzugten Ausführungsform liegt der Gewichtsanteil des organischen Materials in dem oberen Teilchengrößenbereich (A) absolut gesehen 5 Gew-%, insbesondere mindestens 10 Gew.-%, weiter bevorzugt mindestens 15 Gew.-% höher als der Gewichtsanteil des organischen Materials in dem unteren Teilchengrößenbereich (B), d.h. die angegebene Differenz bezieht sich auf den Vergleich der jeweiligen absoluten Gewichtsanteile des organischen Materials in den Teilchengrößenbereichen.

Der geringere Gewichtsanteil des organischen Materials mit dem Tonmaterial im unteren Teilchengrößenbereich bewirkt, dass die kleineren Teilchen mit einer Teilchengröße von weniger als etwa 2 mm weniger leicht bei der Verwendung des Sorptionsmittels aus einer Tiertoilette ausgetragen werden. Es wurde gefunden, dass Teilchen mit einer Teilchengröße von weniger als etwa 2 mm besonders problematisch für einen Austrag aus der Tiertoilette sind. Weiterhin wurde überraschend gefunden, dass durch den niedrigeren Anteil an organischen Material, insbesondere cellulosehaltigem Material in diesen kleinen Teilchen offenbar sowohl die Oberfläche der Teilchen weniger leicht an dem Tierfell bzw. den Pfoten haftet, als auch ein höheres spezifisches Gewicht der kleinen Teilchen (über das anorganische Material) einstellbar ist, wodurch das Austragen aus der Tiertoilette weiter erschwert wird. Durch den höheren Anteil der organischen Komponente können gleichzeitig die Vorteile eines leichten Schüttgewichts der Tierstreu insgesamt, als auch die Vorteile der Verwendung von natürlichen nachwachsenden Rohstoffen (cellulosehaltigem Material) erzielt bzw. beibehalten werden.

Nach einer weiteren bevorzugten Ausführungsform liegt der Gewichtsanteil des organischen Materials in dem oberen Teilchengrößenbereich (A) bei mindestens 50 Gew.-%, insbesondere bei mindestens 60 Gew.-%. Nach einer Ausführungsform liegt er zwischen etwa 10 und 100 Gew.-%, insbesondere zwischen etwa 20 und 95 Gew.-%, bevorzugt zwischen etwa 30 und 90 Gew.-% liegt, jeweils bezogen auf das Gesamtgewicht der Teilchen in dem oberen Teilchengrößenbereich..

Nach weiteren bevorzugten Ausführungsformen liegt der Gewichtsanteil des organischen Materials in dem unteren Teilchengrößenbereich (B) bei maximal 75 Gew.-%, insbesondere maximal 65 Gew.-%, insbesondere maximal 50 Gew.-%, insbesondere maximal 40 Gew.-%, insbesondere maximal 30 Gew.-%. Beispielsweise liegt er zwischen 0 und etwa 80 Gew.-%, insbesondere zwischen etwa 1 und 70 Gew.-% liegt, jeweils bezogen auf das Gesamtgewicht der Teilchen in dem unteren Teilchengrößenbereich.

Die Ausdrücke "Gewichtsanteil des organischen Materials" bzw. "Gewichtsanteil des mindestens einen cellulosehaltigen Materials" sind im Rahmen der vorliegenden Erfindung als Gesamtgewichtsanteil in den jeweiligen Granulatteilchen vorhandener organischen bzw. cellulosehaltigen Materialien zu verstehen.

Das anorganische Material weist mindestens ein Tonmaterial auf. Bevorzugt besteht das anorganische Material im Wesentlichen, insbesondere zu mehr als 75 Gew.-%, vorzugsweise mehr als 85 Gew.-%, weiter bevorzugt mehr als 90 Gew.-%, weiter bevorzugt mehr als 95 Gew.-% aus mindestens einem Tonmaterial. Nach einer bevorzugten Ausführungsform der Erfindung besteht das anorganische Material vollständig aus mindestens einem Tonmaterial, so dass die beiden Begriffe "anorganisches Material" und "mindestens ein Tonmaterial" bei dieser erfindungsgemäßen Ausführungsform gleich zu setzen sind. Die Anwesenheit weiterer anorganischer Komponenten ist nicht grundsätzlich ausgeschlossen. Bevorzugt enthält jedoch das anorganische Material neben dem mindestens einen Tonmaterial weniger als 10 Gew.-%, insbesondere weniger als 5 Gew.-%, insbesondere weniger als 3 Gew.-%an anderen anorganischen Komponenten.

Als Tonmaterial gemäß der vorliegenden Erfindung kann grundsätzlich jedes dem Fachmann geläufige Tonmaterial verwendet werden. Das Tonmaterial kann einen einzelnen Ton oder ein Tongemisch enthalten. Als Tone bzw. Tonminerale in dem verwendeten Tonmaterial werden Schichtsilicate bevorzugt, insbesondere Zweischichtund Dreischichtsilicate. Bevorzugt sind dabei die Smektite, Vermiculite, Illite, Chlorite und Sepiolithe/Palygorskite und Attapulgite. Besonders bevorzugt enthält das Tonmaterial mindestens ein smektitisches Tonmineral wie Montmorillonit, Hektorit, Saponit, Beidellit oder Nontronit. Weiter bevorzugt enthält das Tonmaterial mindestens einen smektitisches Tonmineral der Montmorillonit-Gruppe, wie Bentonit, aber auch Hectorit, Glauconit, Sauconit, Illit oder dergleichen können verwendet werden. Es können wie oben erwähnt auch Gemische verschiedener Tonmineralien eingesetzt werden.

Gemäß einer bevorzugten erfindungsgemäßen Ausführungsform enthält das Tonmaterial einen Bentonit. Bentonit besteht zum größten Teil aus Montmorillonit, wodurch die starke Feuchtigkeitsaufnahme- und Quellfähigkeit bedingt wird. Das Aluminiumsilicat Montmorillonit ist dabei ein Dreischichtmaterial, aufgebaut aus zwei SiO₄-Tetraederschichten, zwischen denen sich eine Oktaederschicht aus vorwiegend Aluminiumionen befindet.

Vorzugsweise wird ein Bentonit verwendet, welcher mehr als 50%, vorzugsweise mehr als 60%, weiter vorzugsweise mehr als 70%, noch weiter vorzugsweise mehr als 80% Montmorillonit enthält.

Durch isomorphen Ersatz der dreiwertigen Aluminiumionen im Montmorillonit durch zweiwertige Ionen, wie beispielsweise Calcium oder Magnesium, entsteht eine negative Überschussladung, die z.B. durch Mg²⁺, Ca²⁺, Na⁺ ausgeglichen werden kann. Der Austausch mit Kationen wie Na⁺ und Ca²⁺ beeinflusst auch ganz wesentlich das Quellverhalten des Bentonits. So bewirken eingelagerte Calciumionen einen engeren schichtförmigen Aufbau, während eingelagerte Natriumionen eine offenere Schichtung des Bentonits erlauben.

Als Tonmaterial im Sinne der vorliegenden Erfindung wird bevorzugt ein Material verstanden, welches mindestens ein Tonmineral enthält, vorzugsweise zu mindestens 50%, weiter bevorzugt zu mindestens 60%, noch weiter bevorzugt zu mindestens 75%, noch weiter bevorzugt zu mindestens 85%, insbesondere zu mindestens 90% aus einem oder mehreren Tonmineralen besteht. Nach einer bevorzugten Ausführungsform der Erfindung besteht das Tonmaterial aus mindestens einem Ton oder Tonmineral.

Die Ausdrücke "Gewichtsanteil des anorganischen Materials" bzw. "Gewichtsanteil des mindestens einen Tonmaterials" sind im Rahmen der vorliegenden Erfindung als Gesamtgewichtsanteil in den jeweiligen Granulatteilchen vorhandener anorganischen Materialien bzw. Tonmaterialien zu verstehen.

Nach einer weiteren erfindungsgemäßen Ausführungsform liegt der Gewichtsanteil des anorganischen Materials in dem oberen Teilchengrößenbereich (A) zwischen 0 und 90 Gew.-%, insbesondere zwischen etwa 5 und 50 Gew.-% liegt, jeweils bezogen auf das Gesamtgewicht der Teilchen in dem oberen Teilchengrößenbereich. Nach einer weiteren erfindungsgemäßen Ausführungsform liegt der Gewichtsanteil des anorganischen Materials in dem unteren Teilchengrößenbereich (B) zwischen etwa 20 und 100 Gew.-%, insbesondere zwischen etwa 30 und 99 Gew.-% liegt, jeweils bezogen auf das Gesamtgewicht der Teilchen in dem unteren Teilchengrößenbereich.

Das anorganische Material bzw. das organische Material können im oberen und unteren Teilchengrößenbereich jeweils gleich sein, oder sie können sich unterscheiden, z.B. durch die Wasseraufnahmefähigkeit oder die BET-Oberfläche.

Nach einer weiteren bevorzugten Ausführungsform besteht das Sorptionsmittelgranulat weitgehend oder vollständig aus dem anorganischen Material und dem organischen Material.

Wie hierin verwendet kann das anorganische Material jeweils aus einer oder mehr anorganischen Komponenten (Materialien) zusammengesetzt sein, d.h. auch eine Mischung darstellen. Wie hierin verwendet kann das organische Material jeweils aus einer oder mehr organischen Komponenten (Materialien) zusammengesetzt sein, d.h. auch eine Mischung darstellen.

Gegebenenfalls können in dem anorganischen Material und/oder in dem organischen Material weitere Zuschlagstoffe wie insbesondere Bindemittel, beispielsweise in einem Gewichtsanteil von 0,1 - 10 Gew.-% vorhanden sein.

Nach einer vorteilhaften Ausführungsform machen das mindestens eine Tonmaterial und das mindestens eine cellulosehaltige Material zusammen mindestens 50 Gew.-%, insbesondere mindestens 75 Gew.-%, bevorzugt mindestens 90 Gew.-%, weiter bevorzugt mindestens 95 Gew.-% des Gesamtgewichts des Sorptionsmittelgranulats aus.

Nach einer bevorzugten Ausführungsform weist das anorganische Material, insbesondere das mindestens eine Tonmaterial eine Wasseraufnahmefähigkeit von mindestens 100 %, insbesondere mindestens 150 %, weiter bevorzugt mindestens 200 % auf.

Nach einer weiteren bevorzugten Ausführungsform liegt die BET-Oberfläche des anorganischen Materials, insbesondere des mindestens einen Tonmaterials (insbesondere bestimmt durch die DIN 66131) bei mindestens 10 m²/g, insbesondere mindestens 25 m²/g, bevorzugt mindestens 50 m²/g.

Wie vorstehend ausgeführt eignet sich das Sorptionsmittel gemäß der vorliegenden Erfindung insbesondere als bei der Aufnahme von Flüssigkeit klumpenbildende Tierstreu.

Ein weiterer Aspekt der vorliegenden Erfindung betrifft ein Verfahren zur Herstellung eines Sorptionsmittels in Granulatform enthaltend eine anorganische Komponente mit mindestens einem Tonmaterial und einer organischen Komponente mit mindestens einem cellulosehaltigen Material nach einem der vorstehenden Ansprüche, umfassend die folgenden Schritte:
a) Bereitstellen eines Granulats mit einer Teilchengröße von mindestens 2 mm,
b) Bereitstellen eines Granulats mit einer Teilchengröße von weniger als 2 mm, wobei der Gewichtsanteil des organischen Materials in dem Granulat gemäß Schritt a) größer ist als der Gewichtsanteil des organischen Materials in dem Granulat gemäß Schritt b).
c) Mischen der Granulate gemäß der Schritte a) und b), um ein Granulatgemisch zu erhalten, in dem der Gewichtsanteil des organischen Materials in dem oberen Teilchengrößenbereich (A) größer ist als der Gewichtsanteil des organischen Materials in dem unteren Teilchengrößenbereich (B).

Das Granulat mit einer Teilchengröße von mindestens 2 mm gemäß Schritt (a) kann nach einem herkömmlichen dem Fachmann geläufigen Verfahren erfolgen, beispielsweise dem in der EP 0 619 140 B1 oder auch der EP 0 961 542 B1 beschriebenen Verfahren zur Herstellung von sowohl zellulosehaltigen Material als auch Tonmaterial enthaltenden Granulaten. Die Teilchengröße kann auf dem Fachmann übliche Weise unter Verwendung von Sieben mit geeigneter definierter Siebmaschenweite eingestellt bzw. klassiert werden.

Nach einer Ausführungsform wird die erfindungsgemäße Mischung kompaktiert, brikettiert oder pressgranuliert. Nach einer weiteren bevorzugten Ausführungsform wird das Ausgangsgemisch bei einem Wassergehalt von 5 bis 20% in einem Pressaggregat (z.B. in einem Walzenkompaktierer der Firma Bepex oder der Firma Köppern) kompaktiert, brikettiert oder pressgranuliert.

Entsprechend kann das Granulat mit einer Teilchengröße von weniger als 2 mm gemäß Schritt (b) hergestellt werden. Dabei wird der Anteil an dem organischen Material in dem Granulat gemäß Schritt (a) so gewählt, dass er höher liegt als der Anteil an dem organischen Material in dem Granulat gemäß Schritt (b). Vorzugsweise wird der Anteil an dem organischen Material innerhalb der vorstehend beschriebenen bevorzugten Bereiche gewählt.

Bevorzugt wird der Anteil an dem anorganischen Material in dem Granulat gemäß Schritt (b) so gewählt, dass er höher liegt als der Anteil in dem Granulat gemäß Schritt (a). Besonders bevorzugt wird der Anteil an dem anorganischen Material innerhalb der vorstehend beschriebenen bevorzugten Bereiche gewählt.

In einer bevorzugten Ausführungsform liegen die Gewichtsverhältnisse zwischen dem organischen Material und dem anorganischen Material, insbesondere zwischen dem mindestens einen cellulosehaltigem einerseits und dem mindestens einem Tonmaterial andererseits zwischen 0,5 : 9,5 und 6,5 : 3,5, insbesondere zwischen 1 : 9 und 5 : 5.

Die Eigenschaften des erfindungsgemäßen Sorptionsmittels werden im Allgemeinen wie folgt bestimmt:

### 1. Teilchenaustrag

Zur Bestimmung des Teilchenaustrags bei Verwendung des Sorptionsmittel als Tierstreu in einer Tiertoilette wird eine herkömmliche wannenförmige Tiertoilette mit dem Sorptionsmittel in einer Höhe von ca. 7 cm befüllt. Nach jeder Benutzung durch eine Katze werden die Pfoten und das Fell des Tieres auf anhaftende Teilchen untersucht und die Teilchen zur besseren Quantifizierung vom Fell bzw. den Pfoten abgestrichen oder abgekämmt und durch visuelle Inspektion und Auswiegen quantifiziert. Dieser Vorgang wird mindestens 25 mal wiederholt, um eine bessere statistische Auswertung zu erhalten.

### 2. Wasseraufnahmefähigkeit (Saugfähigkeit)

Nach einer Modifikation der Methode 17-A der Firma WESTINGHOUSE werden 20 g des körnigen Sorptionsmittels, welches zuvor bei 110°C bis zur Gewichtskonstanz getrocknet wurde, in ein gewogenes kegelförmiges Drahtsiebgewebe mit einem Durchmesser von 7 cm und einer Höhe von 7,6 cm eingewogen.

Das gefüllte Sieb wird dann in ein mit Wasser gefülltes Becherglas derart eingehängt, dass das Material vollständig mit Wasser bedeckt ist. Nach einer Saugzeit von 20 Minuten wird das Sieb weitere 20 Minuten in ein leeres Becherglas zum Abtropfen gehängt. Nach Beendigung der Tropfzeit wird das Sieb mit Inhalt erneut gewogen. Die Wasseraufnahmefähigkeit (%) entspricht der Gleichung 100 x E / D, wobei E die aufgesaugte Menge Wasser und D die Einwaage des körnigen Materials bedeutet.

### 3. Klumpenbildung

Die beim Absorptionstest gebildeten Klumpen, die einen horizontalen Durchmesser von etwa 60 bis 100 mm und eine vertikale Abmessung von etwa 40 bis 70 mm haben, werden mit einer Gitterschaufel mit rautenförmigem Raster (Abmessungen der Schaufelfläche 80x120 mm; Maschenweite 11x11 mm, Stegbreite 0,3 mm) herausgenommen und die jeweilige Klumpentiefe sowie -breite gemessen. Weiterhin wird die Festigkeit der Klumpen nach folgenden Kriterien beurteilt:

### Fester Klumpen:

- der Klumpen lässt sich mit der Gitterschaufel vollständig entnehmen und bleibt während und nach der Herausnahme stabil;
- der Klumpen zeigt plastisches Verhalten und zerbricht erst bei stärkerem Druck zwischen den Fingern in größere Bruchstücke

### Mässig fester Klumpen:

- der Klumpen verformt sich während und nach der Herausnahme, lässt sich aber mit der Gitterschaufel vollständig entnehmen;
- der Klumpen zerfällt bei leichtem Druck zwischen den Fingern in kleinere Bruchstücke

### 4. Geruchsbindung

Das Sorptionsmittel wird über einen Zeitraum von mehreren Tagen in einem Tierheim in der Praxis benutzt. Zusätzlich wird von einer Testgruppe die Geruchsbindung bzw. die subjektive Geruchswahrnehmung der Streu zu verschiedenen Zeitpunkten anhand anonymisierter Proben beurteilt und ausgewertet. Es erfolgt mindestens eine Dreifachbestimmung durch drei unabhängige Geruchstester.

Zudem wurde die Geruchsbildung in den ersten Minuten unmittelbar nach der Aufbringung von Katzenurin untersucht und bewertet.

### 5. Bestimmung des Anteils an dem anorganischen Material und dem organischen Material

Der Anteil an dem anorganischen Material und dem organischen Material in dem jeweiligen Granulat bestimmt sich durch die verwendeten Einsatzmengen und muss somit in der Regel nicht bestimmt werden, wenn auf die gleichmäßige Verteilung der Materialien über das verwendete Teilchengrößenspektrum durch geeignete Homogenisierung und Vermischung geachtet wird. Geeignete Verfahren zur ausreichend gleichmäßigen Homogenisierung und Vermischung der Materialien sind bekannt, beispielsweise aus der EP 0 619 140 B1 oder der EP 0 961 542 B1 und den dort beschriebenen Herstellungsverfahren.

Falls eine Bestimmung an einer Probe erforderlich sein sollte, kann zur Bestimmung des (relativen) Anteils des anorganischen Materials und das organischen Materials nach einer Ausführungsform der Erfindung der Glühverlust durch Erhitzen der Probe (die zuvor bei 110 °C in einem Trockenofen bis zur Gewichtskonstanz getrocknet wurde) bei einer Temperatur von 550 °C in einem Muffelofen bis zur Gewichtskonstanz, nach anschließendem Abkühlen der Proben auf Raumtemperatur in einem Exsikkator, bestimmt werden. Der prozentuale Anteil des Glührückstands bezogen auf das Anfangsgewicht der vorgetrockneten Probe wird mit dem Anteil an dem anorganischen Material gleichgesetzt. Der prozentuale Rest wird mit dem organischen Materialanteil gleichgesetzt.

Die Erfindung wird durch die nicht beschränkenden, nachstehenden Beispiele näher erläutert:

### Beispiel 1 - Herstellung der Granulate

a) Granulat mit einem Teilchengrößenbereich (A) von 2 mm bis 5 mm:
   Die Herstellung kann wie in der EP 0 619 140 B1 bzw. der EP 0 961 542 B1 in den jeweiligen erfindungsgemäßen Beispielen beschrieben erfolgen, insbesondere:
      Etwa jeweils 2 kg einer Mischung, bestehend aus 60 Gew.-% aufgemahlenem Holzmehl (etwa 10 Gew.-% Wasser, Partikelgröße etwa 0,5 mm), 20 Gew.-% eines Calziumbentonits und 20 Gew.-% Natriumbentonit (Wasseraufnahmefähigkeit des Bentonitgemisches etwa 200 %; Wassergehalt von etwa 12,5 Gew.-%) wird durch Zusatz von Wasser auf einen Feuchtigkeitsgehalt von 23 Gew.-% eingestellt.
      Das Holzmehl und die Bentonitmischung werden innig miteinander vermischt und in einer Flachmatrizenpresse der Firma Kahl (Typ 14-175) durch Pressformen verdichtet. Diese Flachmatrizenpresse ist im Wesentlichen ein zylindrisches Gefäß mit einem Innendurchmesser von etwa 20 cm mit einer gelochten Bodenplatte (Lochdurchmesser 3mm), in welchem zwei um die Zylinderachse umlaufenden Walzen vorgesehen sind. Die Walzen üben auf die feuchte Mischung aus Holzmehl und Bentonitgemisch einen Pressdruck aus, wodurch die feuchte Mischung durch die gelochte Bodenplatte gepresst wird. Der Energieeintrag beträgt etwa 6 kWh/to. Die durch die Lochplatte hindurchtretenden Formkörper werden durch eine unterhalb der Lochplatte angeordnete Schneidevorrichtung (Abstreifer) quer zu ihrer Längsachse in Stücke mit einer Länge von etwa 5 mm zerteilt. Bereits bei der Zerteilung treten auch kleinere Bruchstücke auf.
   Die erhaltenen Granulate werden etwa 6 Stunden bei 80°C bis auf einen Restwassergehalt von 7,5 Gew.-% getrocknet, wobei es bereits bei einem geringen Druck zerbröselt. Die Granulate werden gesiebt, wobei die Teilchengröße zwischen 2 und 5 mm durch Sieben klassiert wurde.
b) Granulat mit einem Teilchengrößenbereich (B) von 0,5 mm bis weniger als 2 mm:
   Das Granulat mit der unteren Teilchengröße von 0,5 mm bis weniger als 2 mm wird in entsprechender Weise wie vorstehend beschrieben, hergestellt, wobei 40 Gew.-% des aufgemahlenen Holzmehls, 30 Gew.-% des Calciumbentonits und 30 Gew.-% des Natriumbentonits wie vorstehend beschrieben, verwendet wurden.
   Zum Abschluss des Verfahrens wurde das erhaltende Granulat nach dem Trocknen diesmal auf eine Teilchengröße von 0,5 mm bis weniger als 2 mm klassiert.

Die beiden vorstehenden Granulate mit dem oberen Teilchengrößenbereich (2 mm bis 5 mm) und dem unteren Teilchengrößenbereich (0,5 mm bis weniger als 2 mm) wurden in einem Verhältnis von 1:1 bezogen auf die Gewichtsverhältnisse gemischt, um das erfindungsgemäße Sorptionsmittelgranulat zu erhalten.

Zum Vergleich wurde das wie oben hergestellte erste Granulat (a) mit dem Anteil von 60 Gew.-% organischem Material auf einen Teilchengrößenbereich von 0,5 mm bis 5 mm gesiebt, und als Vergleichsgranulat Seite an Seite mit dem erfindungsgemäßen Sorptionsmittelgranulat eingesetzt.

### Beispiel 2 - Untersuchung des Teilchenaustrags

Der Teilchenaustrag wurde wie vorstehend beschrieben für das erfindungsgemäße Granulat und für das Vergleichsgranulat untersucht. Es zeigte sich, dass der Teilchenaustrag bei dem erfindungsgemäßen Sorptionsmittelgranulat wesentlich geringer war als bei dem Vergleichsgranulat. In vielen Fällen waren mit dem erfindungsgemäßen Granulat praktisch keine Teilchen am Fell bzw. den Pfoten der Katzen festzustellen, während bei Verwendung des Vergleichgranulats deutliche Mengen von kleinen Teilchen (kleiner als 2 mm Teilchengröße) am Fell und den Pfoten hafteten.

## Patentansprüche

1. Sorptionsmittel in Granulatform enthaltend ein organisches Material mit mindestens einem cellulosehaltiges Material und ein anorganisches Material mit mindestens ein Tonmaterial,
wobei das Granulat ein Teilchengrößenspektrum mit einem oberen Teilchengrößenbereich (A) mit einer Teilchengröße von mindestens 2 mm, und einen unteren Teilchengrößenbereich (B) mit einer Teilchengröße von weniger als 2 mm umfasst,
und wobei der Gewichtsanteil des organischen Materials in dem oberen Teilchengrößenbereich (A) größer ist als der Gewichtsanteil des organischen Materials in dem unteren Teilchengrößenbereich (B).

2. Sorptionsmittel nach Anspruch 1, **dadurch gekennzeichnet, dass** der Gewichtsanteil des organischen Materials in dem oberen Teilchengrößenbereich (A) mindestens 5 Gew-%, insbesondere mindestens 10 Gew.-%, weiter bevorzugt mindestens 15 Gew.-% höher liegt als der Gewichtsanteil des organischen Materials in dem unteren Teilchengrößenbereich (B).

3. Sorptionsmittel nach einem der vorstehenden Ansprüche, **dadurch gekennzeichnet, dass** der Gewichtsanteil des organischen Materials in dem oberen Teilchengrößenbereich (A) zwischen etwa 10 und 100 Gew.-%, insbesondere zwischen etwa 20 und 95 Gew.-%, bevorzugt zwischen etwa 30 und 90 Gew.-% liegt, jeweils bezogen auf das Gesamtgewicht der Teilchen in dem oberen Teilchengrößenbereich.

4. Sorptionsmittel nach einem der vorstehenden Ansprüche, **dadurch gekennzeichnet, dass** der Gewichtsanteil des anorganischen Materials in dem oberen Teilchengrößenbereich (A) zwischen 0 und 90 Gew.-%, insbesondere zwischen etwa 5 und 50 Gew.-% liegt, jeweils bezogen auf das Gesamtgewicht der Teilchen in dem oberen Teilchengrößenbereich.

5. Sorptionsmittel nach einem der vorstehenden Ansprüche, **dadurch gekennzeichnet, dass** der Gewichtsanteil des organischen Materials in dem unteren Teilchengrößenbereich (B) zwischen 0 und etwa 80 Gew.-%, insbesondere zwischen etwa 1 und 75 Gew.-% liegt, jeweils bezogen auf das Gesamtgewicht der Teilchen in dem unteren Teilchengrößenbereich.

6. Sorptionsmittel nach einem der vorstehenden Ansprüche, **dadurch gekennzeichnet, dass** der Gewichtsanteil des anorganischen Materials in dem unteren Teilchengrößenbereich (B) zwischen etwa 20 und 100 Gew.-%, insbesondere zwischen etwa 30 und 99 Gew.-% liegt, jeweils bezogen auf das Gesamtgewicht der Teilchen in dem unteren Teilchengrößenbereich.

7. Sorptionsmittel nach einem der vorstehenden Ansprüche, **dadurch gekennzeichnet, dass** das anorganische Material und das organische Material zusammen mindestens 50 Gew.%, insbesondere mindestens 75 Gew-%, bevorzugt mindestens 90 Gew.-% des Gesamtgewichts des Sorptionsmittels ausmachen.

8. Sorptionsmittel nach einem der vorstehenden Ansprüche, **dadurch gekennzeichnet, dass** der obere Teilchengrößenbereich (A) aus Teilchen mit einer Teilchengröße von 2 mm bis 5 mm, und der untere Teilchengrößenbereich (B) aus Teilchen mit einer Teilchengröße von 0,5 mm bis weniger als 2 mm besteht.

9. Sorptionsmittel nach einem der vorstehenden Ansprüche, **dadurch gekennzeichnet, dass** der obere Teilchengrößenbereich (A) aus Teilchen mit einer Teilchengröße von 2 mm bis 3 mm, und der untere Teilchengrößenbereich (B) aus Teilchen mit einer Teilchengröße von 0,1 mm bis weniger als 2 mm besteht.

10. Sorptionsmittel nach einem der vorstehenden Ansprüche, **dadurch gekennzeichnet, dass** das mindestens eine Tonmaterial einen smektitischen Ton, insbesondere einen bentonithaltigen Ton enthält oder daraus besteht.

11. Sorptionsmittel nach einem der vorstehenden Ansprüche, **dadurch gekennzeichnet, dass** es sich bei dem mindestens einen Tonmaterial um ein Tongemisch handelt.

12. Sorptionsmittel nach einem der vorstehenden Ansprüche, **dadurch gekennzeichnet, dass** das organische Material und/oder das anorganische Material mindestens ein Bindemittel, vorzugsweise in einem Gewichtsanteil von bis zu 10 Gew.-%, bezogen auf das Gesamtgewicht des Sorptionsmittels enthält.

13. Sorptionsmittel nach einem der vorstehenden Ansprüche, **dadurch gekennzeichnet, dass** es sich um eine bei der Aufnahme von Flüssigkeit Klumpen bildende Tierstreu handelt.

14. Verfahren zur Herstellung eines Sorptionsmittels in Granulatform nach einem der vorstehenden Ansprüche enthaltend ein organisches Material mit mindestens einem cellulosehaltigen Material und einem anorganischen Material mit mindestens einem Tonmaterial, umfassend die folgenden Schritte:
a) Bereitstellen eines Granulats mit einer Teilchengröße von mindestens 2 mm,
b) Bereitstellen eines Granulats mit einer Teilchengröße von weniger als 2 mm, wobei der Gewichtsanteil des organischen Materials in dem Granulat gemäß Schritt a) größer ist als der Gewichtsanteil des organischen Materials in dem Granulat gemäß Schritt b).
c) Mischen der Granulate gemäß der Schritte a) und b), um ein Granulatgemisch zu erhalten, in dem der Gewichtsanteil des organischen Materials in dem oberen Teilchengrößenbereich (A) größer ist als der Gewichtsanteil des organischen Materials in dem unteren Teilchengrößenbereich (B).

15. Verfahren gemäß Anspruch 14, **dadurch gekennzeichnet, dass** als Granulat gemäß Schritt a) Teilchen mit einer Teilchengröße im Bereich von 2 mm bis 5mm, und als Granulat gemäß Schritt b) Teilchen mit einer Teilchengröße im Bereich von 0,5 mm bis weniger als 2 mm eingesetzt werden.

16. Verwendung eines Sorptionsmittels gemäß einem der vorstehenden Ansprüche als bei der Aufnahme von Flüssigkeit Klumpen bildende Tierstreu, insbesondere zur Verringerung der Klumpentiefe und/oder des Austrags von Teilchen aus einer Tiertoilette.

## Claims

1. A sorption agent in granulate form containing an organic material with at least one cellulose-containing material and an inorganic material with at least one clay material, wherein the granulate comprises a spectrum of particles sizes with an upper range of particle sizes (A) with a particle size of at least 2 mm and a lower range of particle sizes (B) with a particle size of lower than 2 mm,
and wherein the proportion by weight of the organic material in the upper range of particle sizes (A) is higher than the proportion by weight of the organic material in the lower range of particle sizes (B).

2. The sorption agent according to claim 1, **characterized in that** the proportion by weight of the organic material in the upper range of particle sizes (A) is at least 5 % by weight, in particularly at least 10 % by weight, more preferably at least 15 % by weight higher than the proportion by weight of the organic material in the lower range of particle sizes (B).

3. The sorption agent according to one of the preceding claims, **characterized in that** the proportion by weight of the organic material in the upper range of particles sizes (A) is between about 10 and 100 % by weight, in particularly between about 20 and 95 % by weight, preferably between about 30 and 90 % by weight, based on the total weight of the particles in the upper range of particle sizes each.

4. The sorption agent according to one of the preceding claims, **characterized in that** the proportion by weight of the inorganic material in the upper range of particles sizes (A) is between 0 and 90 % by weight, in particularly between about 5 and 50 % by weight, based on the total weight of the particles in the upper range of particle sizes each.

5. The sorption agent according to one of the preceding claims, **characterized in that** the proportion by weight of the organic material in the lower range of particles sizes (B) is between 0 and about 80 % by weight, in particularly between about 1 and 75 % by weight, based on the total weight of the particles in the lower range of particle sizes each.

6. The sorption agent according to one of the preceding claims, **characterized in that** the proportion by weight of the inorganic material in the lower range of particles sizes (B) is between about 20 and 100 % by weight, in particularly between about 30 and 99 % by weight, based on the total weight of the particles in the lower range of particle sizes each.

7. The sorption agent according to one of the preceding claims, **characterized in that** the inorganic material and the organic material together amount to at least 50 % by weight, in particularly at least 75 % by weight, preferably at least 90 % by weight of the total weight of the sorption agent.

8. The sorption agent according to one of the preceding claims, **characterized in that** the upper range of particle sizes (A) consists of particles with a particle size of 2 mm to 5 mm and the lower range of particle sizes (B) consists of particles with a particle size of 0.5 mm to lower than 2 mm.

9. The sorption agent according to one of the preceding claims, **characterized in that** the upper range of particle sizes (A) consists of particles with a particle size of 2 mm to 3 mm and the lower range of particle sizes (B) consists of particles with a particle size of 0.1 mm to lower than 2 mm.

10. The sorption agent according to one of the preceding claims, **characterized in that** the at least one clay material contains or consists of a smectite clay, in particularly a bentonite-containing clay.

11. The sorption agent according to one of the preceding claims, **characterized in that** the at least one clay material is a clay mixture.

12. The sorption agent according to one of the preceding claims, **characterized in that** the organic material and/or the inorganic material contain(s) at least one binder, preferably in a proportion by weight of up to 10 % by weight, based on the total weight of the sorption agent.

13. The sorption agent according to one of the preceding claims, **characterized in that** it is an animal bedding forming lumps by liquid absorption.

14. A method for the production of a sorption agent in granulate form according to one of the preceding claims containing an organic material with at least one cellulose-containing material and an inorganic material with at least one clay material, comprising the following steps:
a) providing of a granulate with a particle size of at least 2 mm,
b) providing of a granulate with a particle size of lower than 2 mm, wherein the proportion by weight of the organic material in the granulate according to step a) is higher than the proportion by weight of the organic material in the granulate according to step b),
c) mixing of the granulates according to steps a) and b) for obtaining a granulate mixture in which the proportion by weight of the organic material in the upper range of particle sizes (A) is higher than the proportion by weight of the organic material in the lower range of particle sizes (B).

15. The method according to claim 14, **characterized in that** as granulate according to step a) particles with a particle size in the range of 2 mm to 5 mm are used and that as granulate according to step b) particles with a particle size in the range of 0.5 mm to lower than 2 mm are used.

16. A use of a sorption agent according to one of the preceding claims as animal bedding forming lumps by liquid absorption, in particularly for reducing the lump depth and/or the removal of particles from an animal toilette.

## Revendications

1. Agent de sorption sous forme de granulat contenant une matière organique avec au moins une matière contenant de la cellulose et une matière inorganique avec au moins une matière argileuse,
dans lequel le granulat comprend un spectre granulométrique avec un intervalle granulométrique supérieur (A) avec une taille de particules d'au moins 2 mm et un intervalle granulométrique inférieur (B) avec une taille de particules inférieure à 2 mm,
et dans lequel la proportion en poids de la matière organique dans l'intervalle granulométrique supérieur (A) est plus élevée que la proportion en poids de la matière organique dans l'intervalle granulométrique inférieur (B).

2. Agent de sorption selon la revendication 1, **caractérisé en ce que** la proportion en poids de la matière organique dans l'intervalle granulométrique supérieur (A) est au moins 5 % en poids, en particulier au moins 10 % en poids, avec une plus grande préférence, au moins 15 % en poids, supérieure à la proportion en poids de la matière organique dans l'intervalle granulométrique inférieur (B).

3. Agent de sorption selon l'une des revendications précédentes, **caractérisé en ce que** la proportion en poids de la matière organique dans l'intervalle granulométrique supérieur (A) est située entre environ 10 et 100 % en poids, en particulier entre environ 20 et 95 % en poids, de préférence entre environ 30 et 90 % en poids, dans chaque cas par rapport au poids total des particules dans l'intervalle granulométrique supérieur.

4. Agent de sorption selon l'une des revendications précédentes, **caractérisé en ce que** la proportion en poids de la matière inorganique dans l'intervalle granulométrique supérieur (A) est située entre 0 et 90 % en poids, en particulier entre environ 5 et 50 % en poids, dans chaque cas par rapport au poids total des particules dans l'intervalle granulométrique supérieur.

5. Agent de sorption selon l'une des revendications précédentes, **caractérisé en ce que** la proportion en poids de la matière organique dans l'intervalle granulométrique inférieur (B) est située entre 0 et environ 80 % en poids, en particulier entre environ 1 et 75 % en poids, dans chaque cas par rapport au poids total des particules dans l'intervalle granulométrique inférieur.

6. Agent de sorption selon l'une des revendications précédentes, **caractérisé en ce que** la proportion en poids de la matière inorganique dans l'intervalle granulométrique inférieur (B) est situé entre environ 20 et 100 % en poids, en particulier entre environ 30 et 99 % en poids, dans chaque cas par rapport au poids total des particules dans l'intervalle granulométrique inférieur.

7. Agent de sorption selon l'une des revendications précédentes, **caractérisé en ce que** la matière inorganique et la matière organique représentent ensemble au moins 50 % en poids, en particulier au moins 75 % en poids, de préférence au moins 90 % en poids, du poids total de l'agent de sorption.

8. Agent de sorption selon l'une des revendications précédentes, **caractérisé en ce que** l'intervalle granulométrique supérieur (A) est constitué de particules présentant une taille de 2 mm à 5 mm, et l'intervalle granulométrique inférieur (B) est constitué de particules présentant une taille de 0,5 mm à moins de 2 mm.

9. Agent de sorption selon l'une des revendications précédentes, **caractérisé en ce que** l'intervalle granulométrique supérieur (A) est constitué de particules présentant une taille de 2 mm à 3 mm, et l'intervalle granulométrique inférieur (B) est constitué de particules présentant une taille de 0,1 mm à moins de 2 mm.

10. Agent de sorption selon l'une des revendications précédentes, **caractérisé en ce que** la au moins une matière argileuse contient une argile smectique, en particulier une argile contenant de la bentonite, ou en est constitué.

11. Agent de sorption selon l'une des revendications précédentes, **caractérisé en ce que** la au moins une matière argileuse est un mélange d'argiles.

12. Agent de sorption selon l'une des revendications précédentes, **caractérisé en ce que** la matière organique et/ou la matière inorganique contiennent au moins un liant, de préférence dans une proportion en poids allant jusqu'à 10 % en poids par rapport au poids total de l'agent de sorption.

13. Agent de sorption selon l'une des revendications précédentes, **caractérisé en ce qu'**il s'agit d'une litière formant des mottes en cas d'absorption de liquide.

14. Procédé de production d'un agent de sorption sous forme de granulat selon l'une des revendications précédentes, contenant une matière organique avec au moins une matière contenant de la cellulose et une matière inorganique avec au moins une matière argileuse, comprenant les étapes suivantes:
a) préparation d'un granulat avec une taille de particules d'au moins 2 mm,
b) préparation d'un granulat avec une taille de particules inférieure à 2 mm, la proportion en poids de la matière organique dans le granulat selon l'étape a) étant supérieure à la proportion en poids de la matière organique dans le granulat selon l'étape b),
c) mélange des granulats selon les étapes a) et b), afin d'obtenir un mélange de granulats, dans lequel la proportion en poids de la matière organique dans l'intervalle granulométrique supérieur (A) est plus élevée que la proportion en poids de la matière organique dans l'intervalle granulométrique inférieur (B).

15. Procédé selon la revendication 14, **caractérisé en ce que** sont utilisées comme granulat selon l'étape a), des particules présentant une taille dans l'intervalle de 2 mm à 5 mm, et comme granulat selon l'étape b), des particules présentant une taille dans l'intervalle de 0,5 mm à moins de 2 mm.

16. Utilisation d'un agent de sorption selon l'une des revendications précédentes comme litière formant des mottes en cas d'absorption de liquide, en particulier pour réduire la profondeur des mottes et/ou l'entraînement de particules d'un bac à litière.
